# EUROPEAN PATENT APPLICATION

(11) **EP 1 016 584 A2**
(43) Date of publication of application: **05.07.2000**
(21) Application number: 00201107.0
(22) Date of filing: 10.05.1996
(51) Int. Cl.: B62D 61/12, B60G 11/46, B60G 11/27, B60G 7/02

(54) **Axe lift system**

(30) Priority: 11.05.1995 NL 1000342
(62) Divisional of application: 96201285.2
(71) Applicant: WEWELER NEDERLAND B.V., NL-7300 AC Apeldoorn (NL)
(72) Inventor: Bramer, Hans, 6961 WR Eerbeek (NL)
(74) Representative: Jorritsma, Ruurd

(57) **Abstract**

An axle lift system for a road vehicle comprises an axle having a trailing arm close to each end, which trailing arms are each mounted on a spring hanger which is attached to the chassis of the road vehicle, and wherein a gas suspension system is provided between each trailing arm or the axle and the chassis, a fixed support, which is fixed to a spring hanger, is located beneath a trailing arm, a bellows is arranged on said support, which bellows can press by means of a seating from below against the trailing arm or a part fixed thereto, for lifting the axle when gas pressure is supplied to the bellows and the gas suspension system is released, wherein the bellows is provided with a bellows rubber which interacts, close to the seating, with positioning means to hold the bellows rubber in a predetermined position with respect to said support. The positioning means exert a pretensioning force on the bellows rubber in the direction of its compressed position

## Description

The invention is related to an axle lift system for a road vehicle, comprising an axle having a trailing arm close to each end, which trailing anus are each mounted on a spring hanger which is attached to the chassis of the road vehicle, and wherein a gas suspension system is provided between each trailing arm or the axle and the chassis, a fixed support, which is fixed to a spring hanger, is located beneath a trailing arm, a bellows is arranged on said support, which bellows can press by means of a seating from below against the trailing arm or a part fixed thereto, for lifting the axle when gas pressure is supplied to the bellows and the gas suspension system is released, wherein the bellows is provided with a bellows rubber which interacts, close to the seating, with positioning means to hold the bellows rubber in a predetermined position.

An axle lift system of this type is disclosed in EP-A-431673. The bellows provided for lifting the axle is attached by means of a rigid spacer to the trailing arm or the spring hanger. Consequently, in operation the bellows is continually exposed to the suspension movements of the trailing arm, which could lead to fatigue in the bellows rubber.

The aim of the invention is to provide an axle lift system which does not have this disadvantage. Said arm is achieved in that the positioning means exert a pretensioning force on the bellows rubber in the direction of its compressed position.

The bellows in the axle lift system according to the invention can be disengaged from the trailing arm, such that it is at rest when the road vehicle is being driven. The positioning means ensure that the free fitting of the bellows is again pressed against the trailing arm in the correct position.

The positioning means can be fixed to the spring hanger. However, fixing to the trailing arm or fixing to the fixed fitting of the bellows is also possible.

The positioning means exert a pretensioning force on the bellows rubber in the direction of its compressed state. As soon as the internal pressure in the bellows rubber falls or becomes zero, for any reason whatsoever, said bellows rubber will be compressed under the influence of the pretensioning force exerted by the positioning means. As has already been mentioned above, the compressed position is clearly defined. Moreover, in this position it is always ensured that the bellows rubber rolls in in the correct manner, without forming folds.

Said positioning means can be constructed in various ways. According to a first possible embodiment, an auxiliary leaf spring is provided, the rigidity of which is appreciably less than that of the trailing arms, which auxiliary spring is fixed by one end to the free fitting and at the other end is fixed to another part of the system.

Fixing of the auxiliary spring to the chassis or spring hanger has the advantage that, when the road vehicle is in normal operation on the road, said auxiliary spring does not have to follow the suspension movements of the vehicle if the fixed fitting is also fixed to the chassis.

This advantage is also achieved in the case of an alternative embodiment, wherein both the auxiliary spring and the fixed fitting are fixed to the trailing arm.

According to a further possible embodiment, a helical spring is provided, one end of which is fixed to the free fitting of the bellows and at the other end of which is fixed to the fixed fitting of the bellows.

According to a further alternative, the positioning means can comprise an essentially non-elastic auxiliary arm which at one end is fixed to the free fitting of the bellows and at the other end is pivotably mounted.

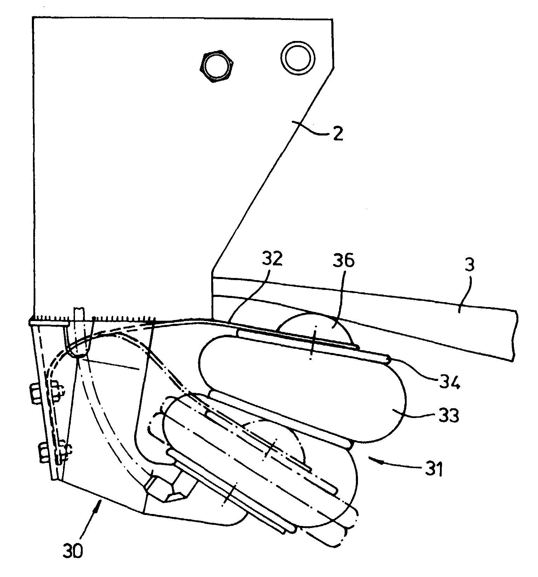

The invention will be explained in more detail below with reference to an illustrative embodiment shown in the figure.

The axle lift system shown comprises two spring hangers 2 which are fixed to a chassis of a road vehicle and each of which has a trailing arm 3, which together support an axle (not shown). A support 30 is fixed to each spring hanger 2, a bellows 31 being arranged between said support 30 and the associated trailing arm 3 in each case. The bellows rubber 33 is fixed to the support 30 via the fixed fitting 35 of the bellows 31; on lifting, the bellows 31 presses by means of the free fitting 34, in particular the stop 36 thereof, against the trailing arm 3.

According to the invention the free fitting 34 is fixed by means of leaf spring 32 to the spring hanger 30. With this arrangement the leaf spring 32 can exert a pretensioning force on the bellows 31 such that, in the absence of an overpressure, the bellows rubber 33 is compressed into the position indicated by broken lines.

The leaf spring 32 can also be hingeably attached to the spring hanger.

## Claims

1. Axle lift system for a road vehicle, comprising an axle having a trailing arm (3) close to each end, which trailing arms (3) are each mounted on a spring hanger (2) which is attached to the chassis of the road vehicle, and wherein a gas suspension system is provided between each trailing arm (3) or the axle (6) and the chassis, a fixed support (30), which is fixed to a spring hanger (2), is located beneath a trailing arm (3), a bellows (31) is arranged on said support (30), which bellows (31) can press by means of a seating (34) from below against the trailing arm (3) or a part fixed thereto, for lifting the axle (6) when gas pressure is supplied to the bellows (31) and the gas suspension system is released, wherein the bellows is provided with a bellows rubber (33) which interacts, close to the seating (34), with positioning means (32) to hold the bellows rubber (33) in a predetermined position with respect to said support (30), characterized in that the positioning means (32) exert a pretensioning force on the bellows rubber (9, 19, 33) in the direction of its compressed position.

2. System according to claim 1, wherein the positioning means (32) are fixed to the spring hanger (2).

3. System according to claim 1, wherein the positioning means are fixed to the trailing arm (3).

4. System according to claim 1, wherein the positioning means are fixed to the chassis.

5. System according to claim 1, wherein the positioning means are fixed to the fixed fitting (15) of the bellows (14).

6. System according to one of claims 1-5, wherein the positioning means comprise an auxiliary spring, the rigidity of which is greater than the resistance of the bellows rubber to rolling in, which auxiliary spring is fixed by one end to the free fitting and at the other end is fixed to another part of the system.

7. System according to claim 6, comprising a spring hanger (2) with two parallel spring hanger plates located some distance apart, wherein the auxiliary spring (13) fits with slight play between said spring hanger plates to provide lateral support for said auxiliary spring.

8. System according to claim 6 or 7, wherein the auxiliary spring is a leaf spring.

9. System according to one of claims 6-8, wherein the auxiliary spring has a pivot point located in the vicinity of the mounting for the trailing arm.

10. System according to any of claims 5-9, wherein a helical spring is provided, one end of which is fixed to the free fitting of the bellows and the other end of which is fixed to the fixed fitting of the bellows.
